# FASCICULE DE BREVET EUROPEEN

(11) **EP 3 449 222 B1**
(45) Date de publication et mention de la délivrance du brevet: **26.02.2020**
(21) Numéro de dépôt: 17724854.9
(22) Date de dépôt: 24.04.2017
(51) Int. Cl.: G01F 11/00, G01F 15/00, B05B 1/16, G01F 11/02, G01F 11/38

(54) **DISPOSITIF DE DISTRIBUTION DE PRODUIT LIQUIDE OU PATEUX**
SPENDER FÜR EIN FLÜSSIGES ODER TEIGFÖRMIGES PRODUKT
DISPENSING DEVICE FOR A LIQUID OR PASTY PRODUCT

(30) Priorité: 26.04.2016 FR 1653683
(43) Date de publication de la demande: 06.03.2019
(73) Titulaire: ERCA, 91940 Les Ulis (FR)
(72) Inventeur: COOPER, Timothy, 94240 L'HAY LES ROSES (FR)
(74) Mandataire: Cabinet Beau de Loménie
(86) Numéro de dépôt international: PCT/FR2017/050953
(87) Numéro de publication internationale: WO 2017/187063

(56) Documents cités:
- EP-A1- 0 745 342
- WO-A2-2005/100188
- FR-A1- 2 699 670
- JP-A- 2003 230 853

## Description

### DOMAINE DE L'INVENTION

Le présent exposé concerne un dispositif de distribution de produits, en particulier un dispositif ayant un corps de distribution commun, utilisé pour distribuer des doses de produits différents.

En particulier, les produits différents se distinguent par leur viscosité ou leur consistance. Ainsi, dans la suite du présent exposé, on indiquera que le dispositif de distribution sert à distribuer un produit liquide et un produit pâteux ou visqueux à travers un corps de distribution commun. Ceci signifie que les deux produits sont de viscosité ou de consistance différentes, le produit pâteux ou visqueux étant plus visqueux ou plus épais que le produit liquide et pouvant même contenir des morceaux solides ou pratiquement solides. Par exemple, le produit pâteux ou visqueux peut être un yaourt ou une compote contenant des morceaux tels que des fruits, tandis que le produit liquide serait un nappage ou un coulis. Ainsi, ces deux produits, le "produit liquide" est le plus liquide et le "produit pâteux" est le moins liquide.

### ARRIERE-PLAN TECHNOLOGIQUE

De façon connue, il est utilisé des dispositifs de distribution, qui présentent une entrée commune pour des produits liquides et des produits visqueux et dans lesquels la section des orifices d'éjection de produit est adaptée aux produits devant être distribués. Notamment, dans ces dispositifs de distribution, les produits liquides sont distribués à travers des orifices de plus petite section que la section des orifices à travers lesquels sont distribués les produits visqueux.

Pour obtenir une telle adaptation des sections des orifices de sortie à la viscosité des produits, ces dispositifs de distribution de l'art antérieur nécessitent le remplacement et le nettoyage d'une tête du corps de distribution dans laquelle les orifices de distribution sont disposés. De tels dispositifs de distribution nécessitent ainsi de remplacer la tête de distribution pour effectuer successivement la distribution d'un premier produit à travers le ou les orifices d'une première tête de distribution, conçue pour le premier produit et la distribution d'un deuxième produit à travers le ou les orifices d'une deuxième tête de distribution, conçue pour le deuxième produit.

On comprend que ces dispositifs distribution ont pour inconvénient majeur qu'ils causent une perte de temps considérable lorsque les têtes de distribution sont montées, démontées et nettoyées afin de distribuer un produit différent.

Pour éviter cette perte de temps entre les phases de montage, démontage et nettoyage des têtes de distribution, la demande de brevet FR 2 699 670 propose un dispositif de dosage pour des produits liquides et des produits visqueux qui présente une entrée commune pour les deux types de produits, l'entrée commune débouchant à l'intérieur d'une chambre à partir de laquelle un produit liquide peut être éjecté à travers de premiers orifices de sortie et à partir de laquelle un produit visqueux peut être éjecté à travers un deuxième orifice de sortie, la section du deuxième orifice de sortie étant supérieure à celles des premiers orifices de sortie. Dans ce dispositif de distribution, deux ensembles mobiles commandent un premier et un deuxième moyen d'obturation qui, indépendamment l'un de l'autre, viennent obturer les premiers orifices ou le deuxième orifice pour distribuer le premier produit à travers les premiers orifices ou le deuxième produit à travers le deuxième orifice.

Toutefois, un tel dispositif de distribution présente pour inconvénient qu'il nécessite l'actionnement de deux ensembles mobiles différents pour sélectivement distribuer le produit liquide ou le produit visqueux à travers les premiers orifices ou le deuxième orifice. Ce dispositif est donc actionné par deux ensembles mobiles disposés dans le corps de distribution qui sont chacun reliés à un obturateur respectif, ce qui met en jeu un nombre de pièces important pour permettre de sélectivement obturer ou libérer les premiers orifices ou le deuxième orifice de distribution de produit.

Par ailleurs, dans un autre domaine, la demande de brevet JP2003 230853 divulgue un pulvérisateur ayant deux conduits de décharge, respectivement pour délivrer du produit en brouillard ou sous forme de gouttelettes.

Il existe donc un besoin de proposer un dispositif de distribution plus simple et de fabrication moins coûteuse, dans lequel les orifices d'éjection de produit peuvent être sélectivement isolés l'un de l'autre.

### PRESENTATION DE L'INVENTION

Afin de répondre à ce besoin, le présent exposé concerne un dispositif de distribution de produit liquide ou pâteux, comprenant un corps de distribution ayant une entrée, une première sortie et une deuxième sortie, ainsi que des moyens pour sélectivement relier l'entrée à la première sortie ou à la deuxième sortie, ces moyens comprenant un piston mobile en va-et-vient dans le corps, le piston présentant une configuration de liaison et étant apte à occuper une première position de distribution dans laquelle le piston relie l'entrée et la première sortie via la configuration de liaison tout en isolant la deuxième sortie par rapport à l'entrée, et une deuxième position de distribution, dans laquelle le piston relie l'entrée et la deuxième sortie tout en isolant la première sortie par rapport à l'entrée, le corps présentant un premier canal dont une première extrémité communique en permanence avec la première sortie et dont une deuxième extrémité est un orifice d'admission apte à être relié à l'entrée via la configuration de liaison dans la première position de distribution du piston, ainsi qu'un deuxième canal, dans lequel se déplace le piston et dont une extrémité communique en permanence avec la deuxième sortie, le deuxième canal étant relié à l'entrée dans les première et deuxième positions du piston, l'orifice d'admission du premier canal s'ouvrant dans le deuxième canal, et l'entrée étant reliée au deuxième canal dans une zone située entre la deuxième sortie et la zone d'ouverture de l'orifice d'admission du premier canal dans le deuxième canal.

Grâce à ces dispositions, c'est la même pièce, à savoir le piston, qui est déplacée pour, dans sa première position de distribution, permettre la distribution d'un premier produit par la première sortie et pour, dans sa deuxième position de distribution, permettre la distribution d'un deuxième produit par la deuxième sortie. Par exemple, les premier et deuxième produits peuvent respectivement être un produit liquide et un produit pâteux, ou l'inverse.

Selon des modes particuliers de réalisation, le dispositif de distribution selon l'exposé peut comprendre une ou plusieurs des options suivantes, prises isolément ou en combinaisons :
Optionnellement, le piston est déplaçable axialement dans le corps entre la première et la deuxième position.

Optionnellement, le piston est en outre déplaçable en rotation dans le corps.

Optionnellement, le premier canal comprend un perçage axial et un perçage radial du corps, le perçage radial coupant le perçage axial, et présentant une extrémité qui est située à l'intérieur du corps et qui forme l'orifice d'admission et une autre extrémité qui est située sur la surface extérieure du corps et qui est obturée.

Optionnellement, la paroi du deuxième canal définit une chemise dans laquelle le piston est déplaçable à contact de glissement.

Optionnellement, la configuration de liaison comprend une rainure annulaire et un canal de liaison axial en communication avec la rainure.

Optionnellement, le canal de liaison axial comprend une gorge ouverte sur la face axiale du piston.

Optionnellement, le canal de liaison axial présente une section de passage de fluide au moins sensiblement égale à la section de l'entrée.

Optionnellement, l'entrée présente une section sensiblement égale à la section de la première sortie et/ou de la deuxième sortie.

Optionnellement, la première sortie comprend une pluralité d'orifices de sortie élémentaires dont la somme des sections est sensiblement égale à la section de l'entrée.

### BREVE DESCRIPTION DES DESSINS

L'exposé sera bien compris à la lecture de la description détaillée qui suit, de modes de réalisation représentés à titre d'exemples non limitatifs. La description se réfère aux dessins annexés, sur lesquels :
- la figure 1 est une vue en perspective d'un dispositif de distribution selon l'invention ;
- la figure 2 est une vue éclatée du dispositif de distribution de illustré à la figure 1 ;
- la figure 3A est une vue en coupe axiale du dispositif de distribution selon l'invention dans laquelle le piston occupe une position dans laquelle la première et la deuxième sortie sont isolées par rapport à l'entrée ;
- la figure 4A est une vue en coupe axiale du dispositif de distribution selon l'invention dans laquelle le piston occupe la première position de distribution ;

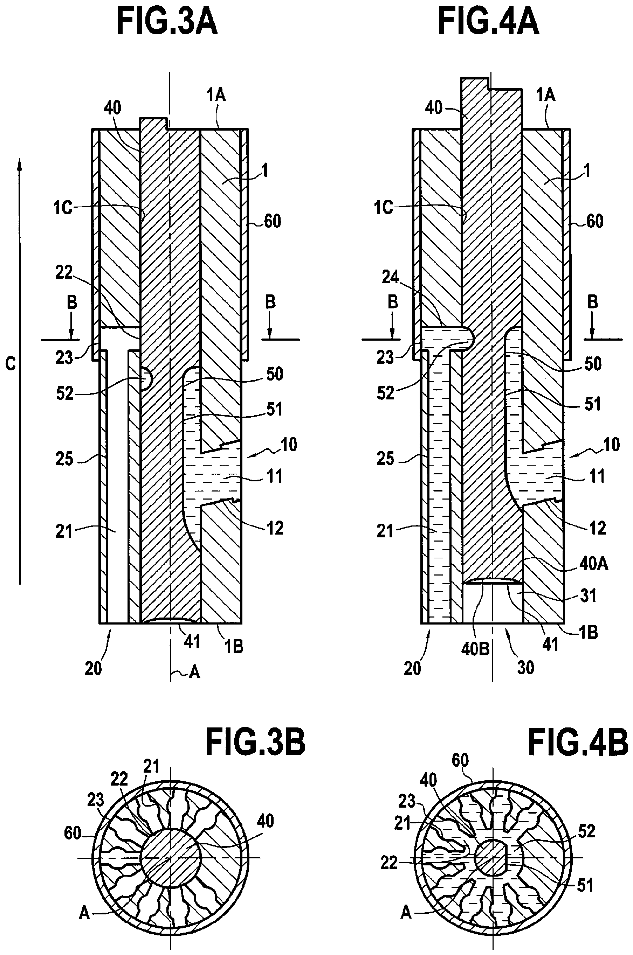

- les figures 3B et 4B sont respectivement des vues selon le plan de coupe AA indiqué sur les figures 3A et 4A ;

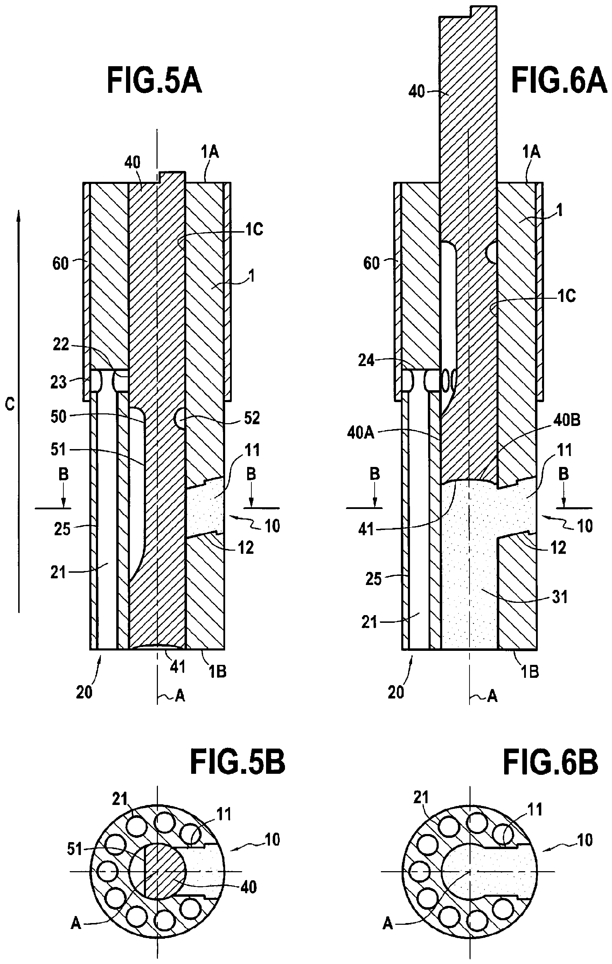

- la figure 5A est une vue en coupe axiale du dispositif de distribution selon l'invention dans laquelle le piston occupe une position dans laquelle la première et la deuxième sortie sont isolées par rapport à l'entrée ;
- la figure 6A est une vue en coupe axiale du dispositif de distribution selon l'invention dans laquelle le piston occupe la deuxième position de distribution ;
- les figures 5B et 6B sont respectivement des vues selon le plan de coupe BB des figures 5A et 6A ;

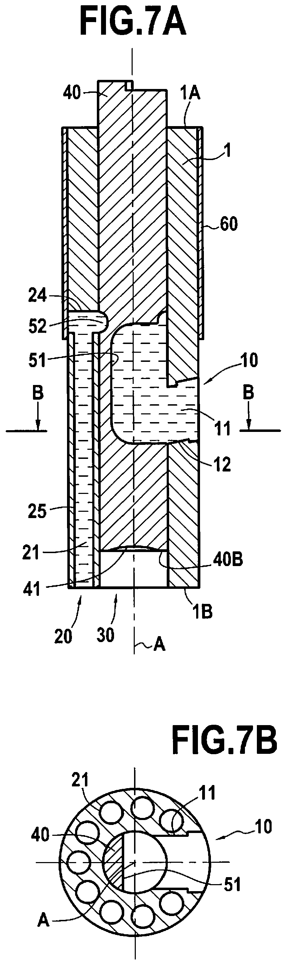

- la figure 7A est une vue en coupe axiale du dispositif de distribution selon l'invention qui représente un autre mode de réalisation du piston; et
- la figure 7B est une vue selon le plan de coupe BB de la figure 7A.

### DESCRIPTION DETAILLEE DE L'INVENTION

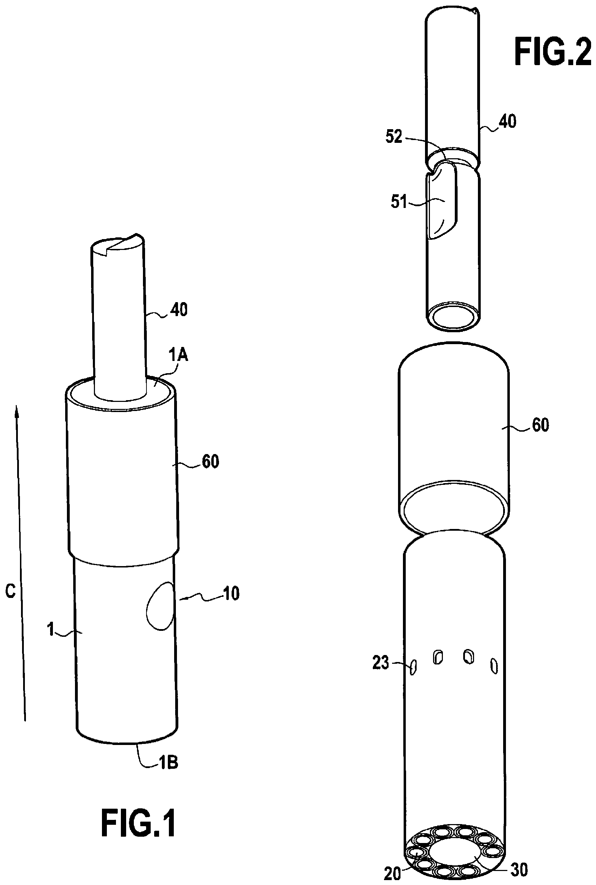

En se référant tout d'abord aux figures 1 et 2, on va décrire la structure externe du dispositif de distribution de produit liquide ou pâteux selon l'invention.

Le dispositif de distribution comprend un corps de distribution 1 dans lequel un piston 40 coulisse en translation selon une direction axiale C. Le corps présente une extrémité proximale 1A et une extrémité distale 1B éloignées l'une de l'autre selon la direction C ; en particulier, la direction C peut être verticale et l'extrémité distale 1B être l'extrémité inférieure du corps.

Le corps de distribution 1 comprend un orifice d'entrée 10 commun pour les différents produits à distribuer. En l'espèce, cet orifice est situé sur la face axiale du corps de distribution 1. Il est destiné à être raccordé à une alimentation de produit (non représentée). En outre, pour l'éjection des produits entrés par l'entrée 10, le corps de distribution 1 comprend à son extrémité distale 1B, une première sortie 20 et une deuxième sortie 30, la première sortie 20 et la deuxième sortie 30 pouvant chacune comprendre un ou plusieurs orifices de sortie élémentaires. En l'espèce, la première sortie 20 comprend une pluralité d'orifices de sortie élémentaires, par exemple neuf orifices de sortie élémentaires et la deuxième sortie 30 comprend un orifice de sortie, les sections de la première sortie (c'est-à-dire la somme des sections de ses orifices de sortie élémentaires) et de la deuxième sortie étant définies pour être chacune sensiblement égale à la section de l'entrée 10. Par souci de simplicité, les orifices élémentaires sont tous désignés par la référence 20 sur les dessins.

Les orifices de sorties élémentaires de la première sortie 20 présentent chacun une section inférieure à celle de l'orifice de sortie de la deuxième sortie 30. La première sortie 20 convient donc particulièrement à la distribution de produit liquide, tandis que la deuxième sortie 30 convient particulièrement à la distribution de produit pâteux. De plus, les orifices de sortie élémentaires de la première sortie 20 sont disposés de façon circonférentielle autour de l'orifice de sortie de la deuxième sortie 30. On remarque par ailleurs qu'un manchon 60 est disposé autour du corps et obture des ouvertures 23, sans obturer en revanche l'orifice d'entrée 10.

En référence à la figure 3A, on va désormais expliquer plus en détails la structure interne du dispositif de distribution.

Le corps de distribution 1 présente un alésage axial interne traversant 1C, dans lequel le piston 40 coulisse en va-et-vient. En l'espèce, la surface interne de cet alésage forme une chemise avec laquelle le piston 40 est en contact de glissement. Le corps de distribution 1 présente également un canal d'entrée 11 formé par un perçage 12 qui s'étend entre l'entrée 10 et l'alésage 1C.

Le corps de distribution 1 présente un premier canal de sortie 21 en communication avec la première sortie 20 et un deuxième canal de sortie 31 en communication avec la deuxième sortie 30.

En l'espèce, le premier canal de sortie 21 comprend une pluralité de premiers canaux élémentaires (également désignés sur les dessins par la référence 21), débouchant chacun sur un orifice de sortie élémentaire de la première sortie 20. Chacun de ces canaux élémentaires comprend un perçage axial 25 du corps de distribution 1. Ces perçages axiaux 25 sont borgnes en ce qu'ils s'ouvrent seulement sur l'extrémité distale 1B et pas sur l'extrémité proximale 1A.

L'alésage central 1C est centré sur l'axe A de déplacement du piston qui, est en l'espèce un axe de symétrie pour l'enveloppe du corps 1. En revanche, les premiers canaux élémentaires sont répartis en couronne autour de cet axe A.

Comme on l'expliquera plus en détails dans la suite, le deuxième canal de sortie 31 est en l'espèce formé par une portion distale de l'alésage 1C, qui s'étend au moins entre le canal d'entrée 11 auquel il est raccordé et l'extrémité distale 1B.

Le corps de distribution 1 présente un perçage de communication 24 qui contribue à mettre en communication le premier canal de sortie 21 avec le canal d'entrée 11. Le perçage de communication est relié à l'alésage 1C par un orifice d'admission 22.

Plus précisément, ce perçage de communication 24 est radial et comprend autant de perçages radiaux élémentaires (également désignés par la référence 24) que le corps présente de premiers canaux élémentaires, chaque perçage radial élémentaire reliant un premier canal élémentaire 21 à l'alésage 1C via un orifice d'admission élémentaire 22. Les orifices d'admission élémentaires sont tous situés sensiblement dans une même tranche radiale du corps 1, c'est-à-dire sensiblement à la même distance de son extrémité distale 1B. On relève que la liaison du canal d'entrée 11 à l'alésage 1C est axialement située entre les orifices d'admission 22 et l'extrémité distale 1B du corps 1.

Le piston 40 présente une configuration de liaison 50 pour permettre de sélectivement relier la première et la deuxième sortie avec l'entrée 10. La configuration de liaison 50 comprend une rainure annulaire 52 et un canal de liaison axial 51 en communication avec la rainure annulaire 52. En l'espèce, ce canal axial 51 est formé par une gorge longitudinale ouverte sur la face axiale du piston 40, et s'étendant sur une partie seulement de sa hauteur.

Ainsi, comme on le verra dans la suite, le déplacement axial du piston permet de faire communiquer le canal d'entrée 10 avec les orifices d'admission 22 et donc avec la première sortie 20 en bloquant la communication entre le canal d'entrée et la deuxième sortie 30, ou au contraire de relier le canal d'entrée 11 à la deuxième sortie 30 en empêchant la communication entre le canal d'entrée 10 et les orifices d'admission 22. Par ailleurs, le piston 40 peut occuper des positions d'isolement, dans lesquelles la première et la deuxième sortie sont toutes les deux isolées du canal d'entrée 11.

En référence aux figures 3A à 6A, on va désormais décrire le fonctionnement du dispositif de distribution pour permettre de sélectivement distribuer à travers la première sortie 20 ou à travers la deuxième sortie 30 un produit alimenté à l'entrée 10 du corps de distribution 1.

La position illustrée par la figure 3A, est une position d'isolement. En effet, le canal de liaison axial 51 communique avec le canal d'entrée 11, mais la paroi du piston 40 obture les orifices d'admission 22 (voir également figure 3B). Ainsi, le produit présent à l'entrée 10, n'est pas distribué par la première sortie 20.

Le produit n'est pas non plus distribué par la deuxième sortie 30 car la paroi du piston 40 est en contact étanche ou quasi-étanche contre la surface de l'alésage entre le canal d'entrée 11 et la deuxième sortie 30.

En revanche, dans la première position de distribution illustrée à la figure 4A, la rainure annulaire 52 du piston 40 est disposée en correspondance avec les orifices d'admission élémentaires 22, puisque la rainure annulaire 52 se trouve à la même hauteur dans le corps de distribution 1 que ces orifices 22. Comme illustré à la figure 4B, la rainure annulaire 52 forme une couronne de distribution, de sorte que, dans cette première position de distribution, cette rainure 52 communique avec les orifices d'admission élémentaires 22 répartis circonférentiellement sur la paroi de l'alésage 1C.

Par ailleurs, dans cette position, la gorge 51 qui forme le canal de liaison axial est encore reliée au canal d'entrée 11. Cette gorge étant reliée en permanence avec la rainure 52, le produit présent dans le canal d'entrée 11 est alimenté dans la gorge 51, la rainure 52, les perçages de communication 24 et, donc, dans le premier canal de sortie 21, jusqu'à la première sortie 20. Cependant, la portion de paroi axiale 40A du piston située entre la gorge 51 et son extrémité distale 40B est en contact étanche ou quasi-étanche avec la paroi de l'alésage 1C, de sorte que la deuxième sortie 30 est encore isolée du canal d'entrée 11.

Ainsi, dans cette première position de distribution, l'entrée 10 est reliée à la première sortie 20 et la deuxième sortie 30 est isolée par rapport à l'entrée 10.

A partir de la position de la figure 3A, la première position de distribution représentée sur la figure 4A est obtenue par un déplacement axial du piston éloignant légèrement son extrémité distale 40B de l'extrémité distale 1B du corps 1 en amenant cette extrémité distale 40B vers l'extrémité proximale 1A du corps.

La figure 5A illustre, comme la figure 3A, une position d'isolement dans laquelle la première sortie 20 et la deuxième sortie 30 sont isolées par rapport à l'entrée 10. Dans cette position, le piston 40 a été pivoté autour de son axe par rapport à la figure 3A pour qu'une partie de la face axiale du piston 40 vienne obturer le canal d'entrée 11 et par conséquent la première sortie 20 et la deuxième sortie 30 sont isolées par rapport à l'entrée 10. Notons que, bien que le piston soit représenté sur la figure 5A dans la même position axiale que sur la figure 3A, cet isolement pourrait directement être obtenu à partir de la position axiale de la figure 4A, en faisant simplement pivoter le piston autour de son axe.

La figure 6A illustre quant à elle la deuxième position de distribution de produit. Dans cette deuxième position de distribution de produit, l'extrémité distale 40B du piston 40 est suffisamment éloignée de l'extrémité distale 1B du corps 1 en amenant cette extrémité distale 40B vers l'extrémité proximale 1A du corps pour découvrir l'orifice du canal d'entrée 11 situé dans l'alésage 1C, de sorte que le canal d'entrée 11 est relié à la deuxième sortie 30.

Cependant, la portion de paroi axiale 40A du piston est en contact étanche ou quasi-étanche contre la surface de l'alésage 1C entre les orifices d'admission 22 et le canal d'entrée 11. Ainsi, le produit alimenté à l'entrée 10 parvient dans le deuxième canal de sortie 31 sans que le piston ne lui fasse obstacle et est distribué à travers la deuxième sortie 30. Dans cette position de distribution, le piston 40 isole l'entrée 10 de la première sortie 20 et le produit alimenté à l'entrée 10 est distribué à travers la deuxième sortie 30.

Lorsque le piston 40 est disposé dans la première position de distribution pour relier l'entrée 10 à la première sortie 20 (figures 4A et 4B), il réalise une étanchéité empêchant que le produit alimenté par l'entrée 10 ne soit distribué à travers la deuxième sortie 30 qui est destinée au deuxième produit.

Inversement, lorsque le piston 40 est disposé dans la deuxième position de distribution pour relier l'entrée 10 à la deuxième sortie 30 (figures 6A et 6B), il réalise une étanchéité empêchant que le produit alimenté par l'entrée 10 soit distribué à travers la première sortie 20 qui est destinée au premier produit.

Pour assurer cette étanchéité dans ces deux positions de distribution, la paroi du deuxième canal 31 définit dans le corps de distribution 1 une chemise dans laquelle le piston 40 est déplaçable à contact de glissement.

Plus particulièrement, dans la première position de distribution, par rapport à la direction axiale C, la portion de paroi axiale 40A du piston 40 s'étend entre le canal d'entrée 11 et l'extrémité distale 1B du corps de distribution 1. Cette portion 40A est définie entre l'ouverture du canal de liaison 51 sur la surface externe du piston 40 (ou, plus précisément, la limite distale de cette ouverture) et l'extrémité distale 40B du piston 40. Cette portion 40A forme, par contact de glissement avec la chemise dans laquelle coulisse le piston 40, une zone d'étanchéité entre le piston 40 et la chemise, ce qui empêche le produit alimenté par l'entrée 10 d'être distribué à travers la deuxième sortie 30 lorsque le piston est disposé dans la première position de distribution.

De façon similaire, dans la deuxième position de distribution, la surface axiale du piston 40 ne masque plus l'ouverture du canal d'entrée 11 dans l'alésage 1C, mais la portion 40A précitée s'étend entre le canal d'entrée 11 et chaque orifice d'admission 22 de la première sortie 20. Dans la deuxième position de distribution, la partie d'extrémité inférieure du piston 40 empêche le produit alimenté au niveau de l'entrée 10 d'être distribué à travers la première sortie 20.

On comprend qu'en utilisant un contact de glissement entre la chemise du corps de distribution 1 et le piston 40, seul le jeu nécessaire à ce glissement est ménagé entre le piston 40 et la chemise, mais une relative étanchéité est réalisée par le contact entre la portion 40A du piston et cette chemise. Par "relative étanchéité", on entend une étanchéité suffisante pour éviter le passage des produits pour lesquels le dispositif est conçu, dans ses conditions usuelles d'utilisation, notamment en termes de pression.

Comme illustré dans les figures 3A à 6A, le piston 40 comprend une configuration de liaison 50 qui comprend une rainure annulaire 52 et un canal de liaison axial 51, le canal de liaison axial 51 étant en communication avec la rainure annulaire 52 pour mettre en communication l'entrée 10 avec la première sortie 20 dans la première position de distribution de produits et pour mettre en communication l'entrée 10 avec la deuxième sortie 30 dans la deuxième position de distribution de produits.

Le canal de liaison axial 51 peut être configuré de différentes façons pour permettre la liaison entre l'entrée 10 et la première sortie 20. De façon préférentielle, comme illustré, le canal de liaison axial 51 comprend une gorge ouverte sur la face axiale du piston 40, cette gorge ouverte pouvant s'étendre sur une partie de la face axiale du piston dans la direction axiale C. Dans un premier exemple de réalisation, la gorge et la rainure annulaire 52 ont la même profondeur radiale, c'est-à-dire qu'elles s'étendent radialement à partir de la face axiale du piston 40 sur la même distance, qui est inférieure au rayon du piston 40. Par exemple, comme on le voit sur la figure 4B, la portion courante de la gorge 51 peut être formée par un méplat assez peu prononcé du piston.

Les figures 7A et 7B illustrent un deuxième exemple de réalisation, dans lequel la profondeur de la rainure annulaire 52 est inférieure à celle de la gorge 51. Plus précisément, la rainure annulaire 52 s'étend radialement à partir la face axiale du piston 40 sur une distance inférieure au rayon du piston 40 et la gorge s'étend radialement à partir de la face axiale du piston 40 sur une distance supérieure au rayon du piston 40. Dans ce cas, comme on le voit sur la figure 7B, la portion courante de la gorge 51 peut également être formée par un méplat, mais plus profond.

Selon le premier ou le deuxième exemple de réalisation, le canal de liaison axial 51 peut présenter une section de passage au moins sensiblement égale à la section de l'entrée 10. En ayant une section sensiblement égale entre l'entrée 10, le canal de liaison axial 51 et la première sortie 20, on évite des changements de section pouvant induire des turbulences dans le dispositif de distribution, ce qui améliore la distribution de produit en favorisant un écoulement laminaire pour les produits distribués.

En outre, l'extrémité distale 40B du piston peut présenter un renfoncement 41. La légère concavité formée par ce renfoncement 41 procure un effet anti-gouttes en retenant sur cette extrémité distale 40B, la petite quantité de produit pâteux éventuellement restée présente à cette extrémité lorsque le piston est dans les positions d'isolement.

En utilisation, le dispositif passe rapidement et aisément de sa première position de distribution à sa deuxième position de distribution, et vice-versa. Par ailleurs, lors de son passage entre ces positions, il peut également passer par l'une ou l'autre des positions d'isolement représentées sur les figures 3A et 5A. Par exemple, à partir de sa deuxième position de distribution représentée sur la figure 6A, le piston est amené dans sa première position de distribution représentée sur la figure 4A en passant d'abord par un déplacement axial, dans la position d'isolement représentée sur la figure 5A pour vider le deuxième canal 31, puis, par une rotation, dans la position d'isolement représentée sur la figure 3A pour que la gorge 51 ait le positionnement angulaire permettant directement sa communication avec l'entrée 10 lorsque le piston subit un nouveau déplacement axial le plaçant dans sa première position de distribution. De même, le piston peut passer de sa première position de distribution représentée sur la figure 4A par un déplacement axial vers l'extrémité distale 1B du corps (dans la position d'isolement représentée sur la figure 3A), suivi par une rotation le plaçant dans la position de la figure 5A, puis par un nouveau déplacement axial inverse, le plaçant dans la position de la figure 6A.

Le dispositif de distribution selon le présent exposé présente un piston unique capable dans ses différentes positions de permettre la communication sélective entre l'entrée et la première ou la deuxième sortie, ce qui lui permet d'avoir une structure simple et à coût de fabrication réduit. De plus, ce dispositif est particulièrement aisé à nettoyer.

En outre, le coût de fabrication du dispositif de distribution est également réduit en fabriquant de façon simple un corps de distribution 1 qui nécessite seulement des éléments de conception simple et des perçages pour sa fabrication.

Comme on l'a indiqué, un manchon 60 est situé autour du corps. En fait, pour simplifier leur fabrication, les perçages radiaux 24 sont réalisés à partir de la surface externe du corps. Le manchon sert simplement à fermer leurs orifices situés sur cette surface externe. Au lieu de ce manchon, des bouchons individuels pourraient être prévus.

Ainsi, on obtient avec une conception simple chaque premier canal 21 pour la distribution de produit à travers la première sortie 20 avec deux perçages, respectivement un perçage axial borgne 25 et un perçage radial 24 dont l'extrémité située sur la face axiale du corps de distribution 1 est bouchée par le manchon.

En ce qui concerne, la deuxième sortie 30, le deuxième canal 31 et la chemise dans laquelle coulisse le piston 40, ceux-ci sont également fabriqués de façon simple et économique en réalisant un perçage axial commun du corps de distribution 1 pour ces éléments.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Dispositif de distribution de produit liquide ou pâteux, comprenant un corps de distribution (1) ayant une entrée (10), une première sortie (20) et une deuxième sortie (30), ainsi que des moyens pour sélectivement relier l'entrée (10) à la première sortie (20) ou à la deuxième sortie (30), ces moyens comprenant un piston mobile (40) en va-et-vient dans le corps (1), le piston (40) présentant une configuration de liaison (50) et étant apte à occuper une première position de distribution dans laquelle le piston (40) relie l'entrée (10) et la première sortie (20) via la configuration de liaison (50) tout en isolant la deuxième sortie (30) par rapport à l'entrée (10), et une deuxième position de distribution, dans laquelle le piston (40) relie l'entrée (10) et la deuxième sortie (30) tout en isolant la première sortie (20) par rapport à l'entrée (10),
le corps (1) présentant un premier canal (21) dont une première extrémité communique en permanence avec la première sortie (20) et dont une deuxième extrémité est un orifice d'admission (22) apte à être relié à l'entrée (10) via la configuration de liaison (50) dans la première position de distribution du piston (40), et un deuxième canal (31), dans lequel se déplace le piston (40) et dont une extrémité communique en permanence avec la deuxième sortie (30), **caractérisé en ce que** le deuxième canal (31) est relié à l'entrée (10) dans les première et deuxième positions du piston (40), **en ce que** l'orifice d'admission (22) du premier canal (21) s'ouvre dans le deuxième canal (31) et **en ce que** l'entrée (10) est reliée au deuxième canal (31) dans une zone située entre la deuxième sortie (30) et la zone d'ouverture de l'orifice d'admission (22) du premier canal (21) dans le deuxième canal (31).

2. Dispositif de distribution de produit liquide ou pâteux selon la revendication 1, **caractérisé en ce que** le piston (40) est déplaçable axialement dans le corps (1) entre la première et la deuxième position.

3. Dispositif de distribution de produit liquide ou pâteux selon la revendication 2, **caractérisé en ce que** le piston (40) est en outre déplaçable en rotation dans le corps (1).

4. Dispositif de distribution de produit liquide ou pâteux selon l'une quelconque des revendications 1 à 3, **caractérisé en ce que** le premier canal (21) comprend un perçage axial et un perçage radial du corps (1), le perçage radial coupant le perçage axial, et présentant une extrémité qui est située à l'intérieur du corps (1) et qui forme l'orifice d'admission (22) et une autre extrémité qui est située sur la surface extérieure du corps (1) et qui est obturée.

5. Dispositif de distribution de produit liquide ou pâteux selon l'une quelconque des revendications 1 à 4, **caractérisé en ce que** la paroi du deuxième canal (31) définit une chemise dans laquelle le piston (40) est déplaçable à contact de glissement.

6. Dispositif de distribution de produit liquide ou pâteux selon l'une quelconque des revendications 1 à 5, **caractérisé en ce que** la configuration de liaison (50) comprend une rainure annulaire (52) et un canal de liaison axial (51) en communication avec la rainure (52).

7. Dispositif de distribution de produit liquide ou pâteux selon la revendication 6, **caractérisé en ce que** le canal de liaison axial (51) comprend une gorge ouverte sur la face axiale du piston (40).

8. Dispositif de distribution de produit liquide ou pâteux selon l'une quelconque des revendications 6 ou 7, **caractérisé en ce que** le canal de liaison axial (51) présente une section de passage de fluide au moins sensiblement égale à la section de l'entrée (10).

9. Dispositif de distribution de produit liquide ou pâteux selon l'une quelconque des revendications 1 à 8, **caractérisé en ce que** l'entrée (10) présente une section sensiblement égale à la section de la première sortie (20) et/ou de la deuxième sortie (30).

10. Dispositif de distribution de produit liquide ou pâteux selon l'une quelconque des revendications 1 à 9, **caractérisé en ce que** la première sortie (20) comprend une pluralité d'orifices de sortie élémentaires (200) dont la somme des sections est sensiblement égale à la section de l'entrée (10).

## Patentansprüche

1. Vorrichtung zur Abgabe eines flüssigen oder pastösen Produkts, umfassend einen Abgabekörper (1), der einen Einlass (10), einen ersten Auslass (20) und einen zweiten Auslass (30) aufweist, sowie Mittel zum selektiven Verbinden des Einlasses (10) mit dem ersten Auslass (20) oder dem zweiten Auslass (30), wobei diese Mittel einen beweglichen Kolben (40) aufweisen, der sich in dem Körper (1) hin- und herbewegt, wobei der Kolben (40) eine Verbindungskonfiguration (50) aufweist und geeignet ist, eine erste Abgabeposition, in der der Kolben (40) den Einlass (10) und den ersten Auslass (20) über die Verbindungskonfiguration (50) verbindet und dabei gleichzeitig den zweiten Auslass (30) gegenüber dem Einlass (10) isoliert, und eine zweite Abgabeposition einzunehmen, in der der Kolben (40) den Einlass (10) und den zweiten Auslass (30) verbindet und dabei gleichzeitig den ersten Auslass (20) vom Einlass (10) isoliert, wobei der Körper (1) einen ersten Kanal (21), wovon ein erstes Ende ständig mit dem ersten Auslass (20) in Verbindung steht und wovon ein zweites Ende eine Einlassöffnung (22) ist, die geeignet ist, mit dem Einlass (10) über die Verbindungskonfiguration (50) in der ersten Abgabeposition des Kolbens (40) verbunden zu werden, und einen zweiten Kanal (31) aufweist, in dem sich der Kolben (40) bewegt und wovon ein Ende ständig mit dem zweiten Auslass (30) in Verbindung steht, **dadurch gekennzeichnet, dass** der zweite Kanal (31) mit dem Einlass (10) in der ersten und zweiten Position des Kolbens (40) verbunden ist, dass die Einlassöffnung (22) des ersten Kanals (21) in den zweiten Kanal (31) mündet und dass der Einlass (10) mit dem zweiten Kanal (31) in einem Bereich, der sich zwischen dem zweiten Auslass (30) und dem Öffnungsbereich der Einlassöffnung (22) des ersten Kanals (21) in den zweiten Kanal (31) befindet, verbunden ist.

2. Vorrichtung zur Abgabe eines flüssigen oder pastösen Produkts nach Anspruch 1, **dadurch gekennzeichnet, dass** der Kolben (40) in dem Körper (1) zwischen der ersten Position und der zweiten Position axial verschiebbar ist.

3. Vorrichtung zur Abgabe eines flüssigen oder pastösen Produkts nach Anspruch 2, **dadurch gekennzeichnet, dass** der Kolben (40) ferner in dem Körper (1) drehbar verschiebbar ist.

4. Vorrichtung zur Abgabe eines flüssigen oder pastösen Produkts nach einem der Ansprüche 1 bis 3, **dadurch gekennzeichnet, dass** der erste Kanal (21) eine Axialbohrung und eine Radialbohrung des Körpers (1) aufweist, wobei die Radialbohrung die Axialbohrung schneidet, und ein Ende, das sich innerhalb des Körpers (1) befindet und die Einlassöffnung (22) bildet, und ein anderes Ende aufweist, das sich an der Außenfläche des Körpers (1) befindet und geschlossen ist.

5. Vorrichtung zur Abgabe eines flüssigen oder pastösen Produkts nach einem der Ansprüche 1 bis 4, **dadurch gekennzeichnet, dass** die Wand des zweiten Kanals (31) eine Hülse definiert, in der der Kolben (40) in Gleitkontakt verschiebbar ist.

6. Vorrichtung zur Abgabe eines flüssigen oder pastösen Produkts nach einem der Ansprüche 1 bis 5, **dadurch gekennzeichnet, dass** die Verbindungskonfiguration (50) eine Ringnut (52) und einen axialen Verbindungskanal (51) in Verbindung mit der Nut (52) aufweist.

7. Vorrichtung zur Abgabe eines flüssigen oder pastösen Produkts nach Anspruch 6, **dadurch gekennzeichnet, dass** der axiale Verbindungskanal (51) eine Nut aufweist, die auf der axialen Seite des Kolbens (40) offen ist.

8. Vorrichtung zur Abgabe eines flüssigen oder pastösen Produkts nach einem der Ansprüche 6 oder 7, **dadurch gekennzeichnet, dass** der axiale Verbindungskanal (51) einen Fluiddurchgangsquerschnitt aufweist, der im Wesentlichen mindestens gleich dem Querschnitt des Einlasses (10) ist.

9. Vorrichtung zur Abgabe eines flüssigen oder pastösen Produkts nach einem der Ansprüche 1 bis 8, **dadurch gekennzeichnet, dass** der Einlass (10) einen Querschnitt aufweist, der im Wesentlichen gleich dem Querschnitt des ersten Auslasses (20) und/oder des zweiten Auslasses (30) ist.

10. Vorrichtung zur Abgabe eines flüssigen oder pastösen Produkts nach einem der Ansprüche 1 bis 9, **dadurch gekennzeichnet, dass** der erste Auslass (20) mehrere elementare Auslassöffnungen (200) aufweist, wovon die Summe der Querschnitte im Wesentlichen gleich dem Querschnitt des Einlasses (10) ist.

## Claims

1. A liquid or pasty substance dispenser device comprising a dispenser body (1) having an inlet (10), a first outlet (20), and a second outlet (30), together with means for selectively connecting the inlet (10) to the first outlet (20) or to the second outlet (30), these means comprising a piston (40) that is movable back and forth in the body (1), the piston (40) presenting a connection configuration (50) and being suitable for occupying a first dispensing position in which the piston (40) connects the inlet (10) with the first outlet (20) via the connecting configuration (50) while isolating the second outlet (30) from the inlet (10), and a second dispensing position in which the piston (40) connects the inlet (10) with the second outlet (30) while isolating the first outlet (20) from the inlet (10), the body (1) presenting a first channel (21) having a first end continuously in communication with the first outlet (20) and having a second end that is an admission orifice (22) suitable for being connected to the inlet (10) via the connection configuration (50) in the first dispensing position of the piston (40), and a second channel (31) in which the piston (40) is movable, said second channel having one end continuously in communication with the second outlet (30), **characterized in that** the second channel (31) is connected to the inlet (10) in the first and second positions of the piston (40), **in that** the admission orifice (22) of the first channel (21) opens out into the second channel (31), and **in that** the inlet (10) is connected to the second channel (31) in a zone that is situated between the second outlet (30) and the zone where the admission orifice (22) of the first channel (21) opens into the second channel (31).

2. A liquid or pasty substance dispenser device according to claim 1, **characterized in that** the piston (40) is axially movable in the body (1) between the first and the second position.

3. A liquid or pasty substance dispenser device according to claim 2, **characterized in that** the piston (40) is also rotatably movable in the body (1).

4. A liquid or pasty substance dispenser device according to any one of claims 1 to 3, **characterized in that** the first channel (21) comprises both an axial hole and also a radial hole in the body (1), the radial hole intersecting the axial hole and presenting both an end that is situated inside the body (1) and that forms the admission orifice (22) and also another end that is situated in the outside surface of the body (1) and that is closed.

5. A liquid or pasty substance dispenser device according to any one of claims 1 to 4, **characterized in that** the wall of the second channel (31) defines a jacket in which the piston (40) is movable with sliding contact.

6. A liquid or pasty substance dispenser device according to any one of claims 1 to 5, **characterized in that** the connection configuration (50) comprises an annular groove (52) and an axial connection channel (51) in communication with the groove (52).

7. A liquid or pasty substance dispenser device according to claim 6, **characterized in that** the axial connection channel (51) comprises a slot that is open in the axial face of the piston (40).

8. A liquid or pasty substance dispenser device according to claim 6 or claim 7, **characterized in that** the axial connection channel (51) presents a fluid flow section that is at least substantially equal to the section of the inlet (10).

9. A liquid or pasty substance dispenser device according to any one of claims 1 to 8, **characterized in that** the inlet (10) presents a section that is substantially equal to the section of the first outlet (20) and/or of the second outlet (30).

10. A liquid or pasty substance dispenser device according to any one of claims 1 to 9, **characterized in that** the first outlet (20) comprises a plurality of individual outlet orifices (200) with the sum of their sections being substantially equal to the section of the inlet (10).
